(19) Europäisches Patentamt / European Patent Office / Office européen des brevets

(11) **EP 3 967 990 B1**

(12) **EUROPEAN PATENT SPECIFICATION**

(45) Date of publication and mention
of the grant of the patent:
**10.04.2024 Bulletin 2024/15**

(21) Application number: **20831909.5**

(22) Date of filing: **25.04.2020**

(51) International Patent Classification (IPC):
**G01F 17/00** *(2006.01)* **G01F 23/00** *(2022.01)*
**G01F 25/00** *(2022.01)* **B60K 15/03** *(2006.01)*
**G01F 22/02** *(2006.01)* G01F 23/18 *(2006.01)*

(52) Cooperative Patent Classification (CPC):
**G01F 17/00; G01F 22/02; G01F 25/0084;**
B60K 2015/03361; B60Y 2400/306; G01F 23/18

(86) International application number:
**PCT/CN2020/086887**

(87) International publication number:
**WO 2020/259051 (30.12.2020 Gazette 2020/53)**

(54) **METHOD AND APPARATUS FOR MEASURING FUEL TANK, AND SERVER**

VERFAHREN UND VORRICHTUNG ZUM MESSEN EINES KRAFTSTOFFTANKS, UND SERVER

PROCÉDÉ ET APPAREIL DE MESURE DE RÉSERVOIR DE CARBURANT, ET SERVEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2019 CN 201910573336**

(43) Date of publication of application:
**16.03.2022 Bulletin 2022/11**

(73) Proprietor: **Nanjing Zeaho Electronic Technology
Co., Ltd
Nanjing, Jiangsu 210000 (CN)**

(72) Inventors:
• **LIU, Zhaotao**
**Nanjing, Jiangsu 210000 (CN)**
• **HUANG, Liang**
**Nanjing, Jiangsu 210000 (CN)**

(74) Representative: **Dr. Gassner & Partner mbB
Wetterkreuz 3
91058 Erlangen (DE)**

(56) References cited:
EP-B1- 0 689 038       EP-B1- 2 301 404
CN-A- 103 674 167      CN-A- 107 860 434
CN-A- 110 307 879      CN-B- 104 634 409
CN-U- 203 534 675      JP-A- H1 090 295
KR-A- 20060 047 387    RU-C1- 2 047 108
US-B1- 7 305 875

## Description

## Technical Field

This application relates to the field of fuel tank calibration, and specifically, to a method for measuring the volume of a fuel tank, a device for measuring the volume of a fuel tank and a server.

## Background

Detection on a fuel tank includes fuel level detection, fuel level status detection, and detection whether refueling is required, and so on.

Inventors have discovered that, if the volume of the fuel tank is inaccurate, metering management of different types of the fuel tanks may be influenced.

In view of a problem in the related art of poor fuel tank metering management, because the volume of different types of fuel tanks cannot be intelligently estimated, no effective solutions have been proposed currently.

CN 104 634 409 B discloses a device for calibrating a tank volume and a corresponding method. The device can automatically calibrate a flow meter in order to improve its accuracy.

KR 2006 0047387 A discloses a measuring system using ultrasonic waves for accurately measuring the distance from the top of a storage container to the surface of the liquid through ultrasonic waves, and then calculating the temperature, pressure, and distance to accurately measure the volume of the liquid contained in the container and the weight of the contents.

RU 2 047 108 C1 discloses a device for measuring the level and the density of a liquid in a container using an ultrasonic piezoelectric transducer (PEP), and the emission of ultrasonic pulses is carried out perpendicular to the liquid level from the bottom point of the bottom of the tank. The piezoelectric transducer is installed vertically at the bottom point of the tank bottom and is additionally equipped with a density measurement and calculation unit.

## Summary

This application is mainly intended to provide a method and device for measuring the volume of a fuel tank, and a server, to resolve problems of poor fuel tank metering management, because the volume of different types of fuel tanks cannot be intelligently estimated.

In order to realize the above purpose, according to one aspect of this application, a method for measuring the volume of a fuel tank is provided.

The problem, on which the invention is based, is solved by a method with the features of claim 1. The method for measuring the volume of a fuel tank according to this application includes: receiving a fuel quantity change parameter calibrated by a user at a smart terminal; receiving a measured liquid level pressure value collected from a fueling terminal through a sensor according to a preset frequency; and inputting the fuel quantity change parameter and the measured liquid level pressure value into a preset volume calibration model and estimating the volume of the fuel tank. The volume calibration model at least includes a maximum liquid level pressure value, when the fuel tank is full, and a minimum liquid level pressure value, when the fuel tank is empty, wherein these pressure values are extracted from the received pressure.

Further, the operation of receiving the fuel quantity change parameter calibrated by the user at the smart terminal includes: monitoring whether the smart terminal has a user calibration operation; if yes, generating the fuel quantity change parameter according to the user calibration operation; and receiving the fuel quantity change parameter.

Further, the operation of receiving the measured liquid level pressure value collected from the fueling terminal through the sensor according to the preset frequency includes: receiving a parameter set of liquid level pressure collected from the fueling terminal through the sensor according to the preset frequency; and recording and storing the parameter set of the liquid level pressure.

Further, the operation of inputting the fuel quantity change parameter and the measured liquid level pressure value into a preset volume calibration model and estimating the volume of the fuel tank includes: extracting a minimum liquid level pressure and a maximum liquid level pressure in the measured liquid level pressure value; determining a correspondence between hydraulic pressure and a volume percentage according to variation of the liquid level pressure with time; estimating a capacity change percentage according to the minimum liquid level pressure, the maximum liquid level pressure and the correspondence between the hydraulic pressure and the volume percentage; and inversely deducing the volume of the fuel tank according to the capacity quantity change percentage and the fuel quantity change parameter.

Further, the operation after inputting the fuel quantity change parameter and the measured liquid level pressure value into the preset volume calibration model and estimating the volume of the fuel tank further includes: extracting the maximum liquid level pressure in the measured liquid level pressure value; determining the correspondence between the hydraulic pressure and the volume percentage according to the variation of the liquid level pressure with time; estimating a current capacity percentage according to the maximum liquid level pressure and the correspondence between the hydraulic pressure and the volume percentage; and calculating a current fuel quantity according to the volume of the fuel tank and the current capacity percentage.

Further, the operation before receiving the fuel quantity change parameter calibrated by the user at the smart terminal further includes: detecting a refueling event by using a fuel tank cap detecting device on the fueling terminal; and if the refueling event is detected, receiving the fuel quantity change parameter calibrated by the user at the smart terminal.

In order to realize the above purpose, according to another aspect of this application, a device for measuring the volume of a fuel tank is provided.

The device for measuring the volume of the fuel tank according to this application includes a first receiving module, a second receiving module, and a volume estimating module. The first receiving module is configured to receive a fuel quantity change parameter calibrated by a user at a smart terminal. The second receiving module is configured to receive a measured liquid level pressure value collected from a fueling terminal through a sensor according to a preset frequency, wherein the second receiving module is configured to extract a minimum liquid level pressure and a maximal liquid level pressure from the received pressure. The volume estimating module is configured to input the fuel quantity change parameter and the measured liquid level pressure value into a preset volume calibration model and to estimate the volume of the fuel tank. The volume calibration model at least includes a liquid level pressure value, when the fuel tank is full, and a liquid level pressure value, when the fuel tank is empty.

Further, the volume estimating module is configured to extract a minimum liquid level pressure and a maximum liquid level pressure in the measured liquid level pressure value, determine a correspondence between hydraulic pressure and a volume percentage according to variation of the liquid level pressure with time, estimate a capacity change percentage according to the minimum liquid level pressure, the maximum liquid level pressure and the correspondence between the hydraulic pressure and the volume percentage, and inversely deduce the volume of the fuel tank according to a fuel quantity change percentage and the fuel quantity change parameter.

Further, the device further includes a monitoring module. The monitoring module is configured to extract the maximum liquid level pressure in the measured liquid level pressure value, determine the correspondence between the hydraulic pressure and the volume percentage according to the variation of the liquid level pressure with time, estimate a current capacity percentage according to the maximum liquid level pressure and the correspondence between the hydraulic pressure and the volume percentage, and calculate a current fuel quantity according to the volume of the fuel tank and the current capacity percentage.

In order to realize the above purpose, according to another aspect of this application, a server is provided.

The server according to this application is configured to perform the foregoing measurement method.

According to the method and device for detecting the fuel tank, and the server in the embodiments of this application, the fuel quantity change parameter calibrated by the user at the smart terminal is received. The measured liquid level pressure value collected from the fueling terminal through the sensor according to the preset frequency is received. The fuel quantity change parameter and the measured liquid level pressure value are input into the preset volume calibration model, and the volume of the fuel tank is estimated. The volume calibration model at least includes a full fueling liquid level pressure value and an air liquid level pressure value. In this way, a purpose that the volumes of different types of the fuel tanks may be intelligently estimated is achieved. Therefore, a technical effect of fuel tank metering management is realized, thereby resolving the technical problems of poor fuel tank metering management, because the volume of the same type of fuel tank cannot be intelligently estimated.

**Brief Description of the Drawings**

The accompanying drawings described herein are used to provide a further understanding of this application, constitute a part of this application, so that other features, objectives and advantages of this application become more obvious. The exemplary embodiments of this application and the description thereof are used to explain this application, but do not constitute improper limitations to this application. In the drawings:

Fig. 1 is a schematic structural diagram of a method for measuring the volume of a fuel tank according to a first embodiment of this application.

Fig. 2 is a flowchart of a method for measuring the volume of a fuel tank according to a second embodiment of this application.

Fig. 3 is a flowchart of a method for measuring the volume of a fuel tank according to a third embodiment of this application.

Fig. 4 is a flowchart of a method for measuring the volume a fuel tank according to a fourth embodiment of this application.

Fig. 5 is a flowchart of a method for measuring the volume a fuel tank according to a fifth embodiment of this application.

Fig. 6 is a flowchart of a method for measuring the volume a fuel tank according to a sixth embodiment of this application.

Fig. 7 is a schematic diagram of a device for measuring the volume of a fuel tank according to a first embodiment of this application.

Fig. 8 is a schematic diagram of a device for measuring the volume of a fuel tank according to a second embodiment of this application.

Fig. 9 is a schematic diagram of a fuel pressure time curve during operation of a machine according to a preferred embodiment of this application.

Fig. 10 is a schematic diagram of hydraulic pressure and a fuel level percentage according to a preferred embodiment of this application.

Fig. 11 is a schematic diagram of a curve ratio of a fuel level percentage over time according to a preferred embodiment of this application.

## Detailed Description of the Embodiments

In order to enable those skilled in the art to better understand the solutions of this application, the technical solutions in the embodiments of this application will be clearly and completely described below in combination with the drawings in the embodiments of this application. It is apparent that the described embodiments are only part of the embodiments of this application, not all the embodiments. All other embodiments obtained by those of ordinary skill in the art on the basis of the embodiments in this application without creative work shall fall within the scope of protection of this application, which is solely defined by the appended claims.

It is to be noted that terms "first", "second" and the like in the description, claims and the above mentioned drawings of this application are used for distinguishing similar objects rather than describing a specific sequence or a precedence order. It should be understood that the data used in such a way may be exchanged where appropriate, in order that the embodiments of this application described here can be implemented. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

In this application, orientation or position relationships indicated by terms "upper", "lower", "left", "right", "front", "back", "top", "bottom", "inside", "outside" "in", "vertical", "horizontal", "transverse", "longitudinal" and the like are orientation or position relationships shown in the drawings. These terms are mainly used to better describe this application and its embodiments, rather than limit that the indicated devices, components and constituting parts must be in specific orientations or structured and operated in the specific orientations.

Furthermore, the above mentioned part of terms may be not only used to represent the orientation or position relationships, but used to represent other meanings, for example, term "on" may be used to represent certain relationship of dependence or connection relationship in some cases. For those of ordinary skill in the art, specific meanings of these terms in this application may be understood according to a specific condition.

In addition, terms "mount", "configure", "provide", "connect", "link" and "sleeved" should be broadly understood. For example, the term "connect" may be fixed connection, detachable connection or integral construction. As an alternative, the term "connect" may be mechanical connection, or electrical connection. As an alternative, the term "connect" may be direct connection, or indirect connection through a medium, or communication in two devices, components or constituting parts. For those of ordinary skill in the art, specific meanings of the above mentioned terms in this application may be understood according to a specific condition.

It is to be noted that the embodiments in this application and the features in the embodiments may be combined with one another without conflict. This application will now be described below in detail with reference to the drawings and the embodiments.

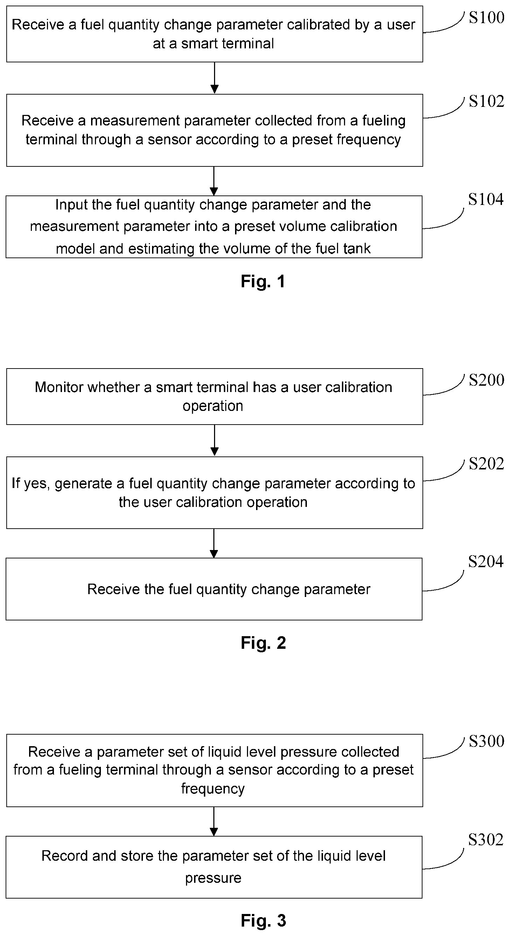

As shown in Fig. 1, the method in an embodiment of this application includes the following S100 to S104.

At S100, a fuel quantity change parameter calibrated by a user at a smart terminal is received.

Specifically, as shown in Fig. 2, the operation of receiving the fuel quantity change parameter calibrated by the user at the smart terminal includes the following steps.

At S200, whether the smart terminal has a user calibration operation is monitored.

At S202, if yes, the fuel quantity change parameter is generated according to the user calibration operation.

At S204, the fuel quantity change parameter is received.

The smart terminal may be portable devices, such as a mobile phone and a tablet computer, or may be a personal computer (pc). In this embodiment, the mobile phone is preferred. Application processing software is installed on the mobile phone, and by means of the software, the user may calibrate the fuel quantity change parameter. Specifically, the user opens the software to enter an interactive interface, and inputs fuel quantity, namely the fuel quantity change parameter, of this fueling in the interactive interface through calibration operation. After the fuel quantity change parameter is acquired, the fuel quantity change parameter is sent to the server. In this way, parameter guarantee may be provided for the volume estimation of the server.

In this embodiment, the smart terminal communicates with the server in wireless transmission modes, such as GPRS, 3G, 4G, and WiFi.

It is to be noted that, in this embodiment, the measurement method is only applicable for volume measurement of regular fuel tanks, such as a cuboid fuel tank and a cube fuel tank.

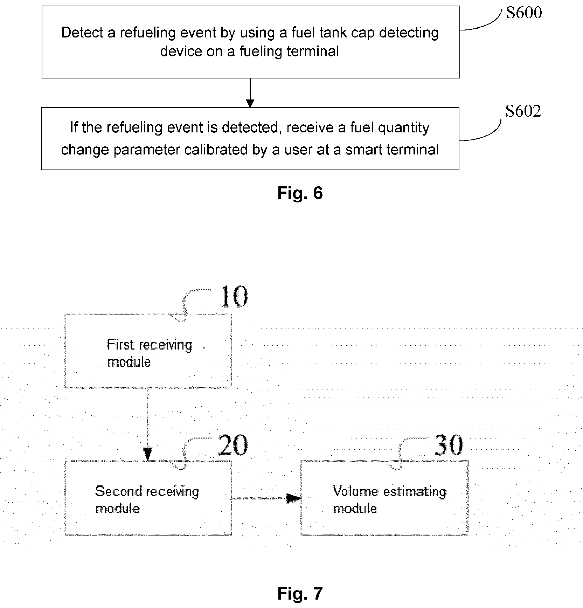

Preferably, as shown in Fig. 6, the operation before receiving the fuel quantity change parameter calibrated by the user at the smart terminal further includes the following steps.

At S600, a refueling event is detected by using a fuel tank cap detecting device on the fueling terminal.

At S602, if the refueling event is detected, the fuel quantity change parameter calibrated by the user at the smart terminal is received.

Only after a certain condition is met, the receiving of the fuel quantity change parameter can be triggered.

In this embodiment, preferably, when the fuel tank cap detecting device on the fueling terminal detects the refueling event, a prompt message is sent to the smart terminal with a binding relationship, to prompt the user to start refueling. After receiving the message, the user may click the prompt message, so that the application processing software can be automatically opened, then corresponding calibration operation is performed to upload the fuel quantity change parameter to the server.

If the fuel tank cap detecting device on the fueling terminal does not detect the refueling event, a link of a stopping reason for no refueling event is output at the smart terminal. In this embodiment, preferably, after receiving the stopping reason, the user may click the link to directly open the software, so as to enter a software interface to check the stopping reason. In this way, the user may continue to operate to restart a program after checking and eliminating the reason on site.

When there is the refueling event, the prompt message may be actively sent. Prompt personnel complete the uploading of the fuel quantity change parameter through the operation of the application processing software. When there is no refueling events, the procedure is stopped, and the uploading of the fuel quantity change parameter is completed only after the user opens the software to operate.

At S102, a measurement parameter collected from a fueling terminal through a sensor according to a preset frequency is received.

Specifically, as shown in Fig. 3, the operation of receiving the measurement parameter collected from the fueling terminal through the sensor according to the preset frequency includes the following steps.

At S300, a parameter set of liquid level pressure collected from the fueling terminal through the sensor according to the preset frequency is received.

At S302, the parameter set of liquid level pressure is recorded and stored.

The fuel quantity change parameter (fuel quantity) is one of parameters of the estimated volume of the fuel tank, so that it requires a plurality of measurement parameters during refueling to realize the estimation of the volume of the fuel tank. The sensor can periodically collect the measurement parameters. That is to say, the liquid level pressure is detected and recorded every a period of time, so as to acquire one parameter set of the liquid level pressure. The liquid level pressure in the parameter set of the liquid level pressure is stored one by one. After refueling is finished, the liquid level pressure is uniformly uploaded to the server, to estimate the volume of the fuel tank.

At S104, the fuel quantity change parameter and the measurement parameter are input into a preset volume calibration model and the volume of the fuel tank is estimated.

The volume calibration model at least comprises a full fueling liquid level pressure value and an air liquid level pressure value.

The air liquid level pressure value is constant to any fuel tanks. Thus, it only needs to be preset in a volume calibration model as a default parameter at factory. The air liquid level pressure value is an essential parameter during volume estimation. In this embodiment, preferably, a plurality of calibration may be performed, so that the accuracy of the estimated volume can be enhanced.

The full fueling liquid level pressure value may vary with the height of the fuel tank. Therefore, when refueling is performed at the first time, personnel needs to be reminded that it is in a fueling state, and a measured maximum liquid level pressure value acts as the full fueling liquid level pressure value. The full fueling liquid level pressure value is an essential parameter during volume estimation.

After the two parameters are acquired in advance, by combining the measurement parameter, the fuel quantity change parameter and the preset volume calibration model, the volume of the fuel tank is estimated.

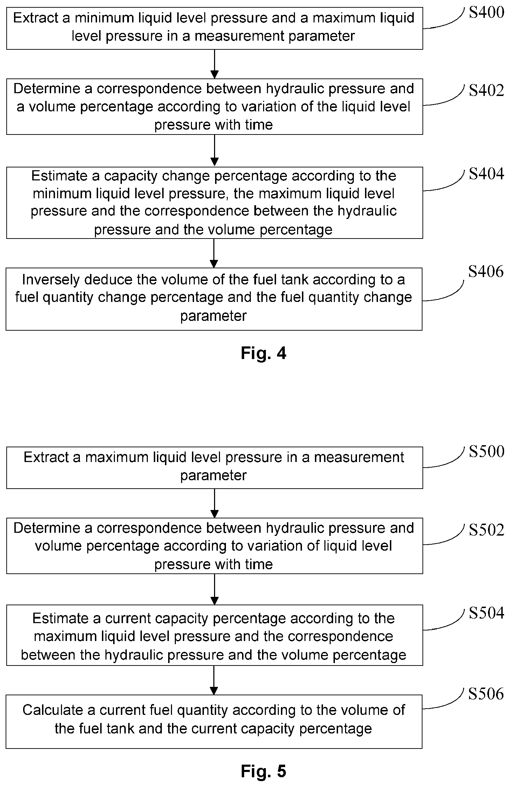

Specifically, as shown in Fig. 4, the operation of inputting the fuel quantity change parameter and the measurement parameter into the preset volume calibration model and estimating the volume of the fuel tank includes the following steps.

At S400, a minimum liquid level pressure and a maximum liquid level pressure in the measurement parameter are extracted.

At S402, a correspondence between hydraulic pressure and a volume percentage is determined according to variation of the liquid level pressure with time.

At S404, a capacity change percentage is estimated according to the minimum liquid level pressure, the maximum liquid level pressure and the correspondence between the hydraulic pressure and the volume percentage.

At S406, the volume of the fuel tank is inversely deduced according to a fuel quantity change percentage and the fuel quantity change parameter.

Specifically, it may be learned from S400 to S406, the capacity change percentage is related to the minimum liquid level pressure and the maximum liquid level pressure, and is unrelated to a refueling process. Thus, only the minimum liquid level pressure (the liquid level pressure before refueling) and the maximum liquid level pressure (the liquid level pressure after refueling) are required to be extracted. In this way, in this embodiment, whether a refueling rate is constant is not limited. A constant refueling rate may be adopted, or a non-constant refueling rate may also be adopted. For ease of description, in this embodiment, assuming the refueling rate of a refueling gun is constant, $\Delta v$ generated in $\Delta t$ is the same. If a collection rate of hardware is constant, the $\Delta t$ between two adjacent hydraulic pressure data points is the same, and the corresponding $\Delta v$ is the same.

Pi{1 ...n} is set as a hydraulic pressure value collected at a fixed frequency at a refueling phase. The hydraulic pressure value in air is known as P0. The bottom shape of the fuel tank is regular. Pn is a collected maximum hydraulic pressure value point. P1 is a minimum hydraulic pressure value point collected at one time.

Polynomial fitting (Pi, i-1) is performed by using Pi{1...m}(m<n) to acquire a slope k and an offset b. Subscript Index0: Index0 = P0 * k + b corresponding to P0 is calculated by using the k, the b and the hydraulic pressure value P0 in air.

The variation of the liquid level pressure with time is shown as follows: Index = P *k + b.

Then, a distance from P1 to P0 accounts a percentage Pct1 of a distance from Pn to P0 is calculated.

$$Pct1 = 0 - Index0/(n - 1 - Index0)$$

In this way, a corresponding percentage increment ∆Pct between the adjacent hydraulic pressure values is obtained.

$$\Delta Pct = (1 - Pct1)/(n - 1)$$

A volume percentage Pcti is acquired finally.

$$Pcti = Pct1 + \Delta Pct * (i-1) \quad (i = 1..n)$$

According to Pcti = Pct1 + ∆Pct * (i-1) (i = 1..n), (Pi, Pcti) may be determined to achieve one-to-one correspondence, so as to form a complete correspondence between the hydraulic pressure values and the percentages.

The minimum and maximum liquid level pressure in the measurement parameter are extracted. Referring to the correspondence between the hydraulic pressure values and the percentages, the percentage of capacity change can be determined, and then the volume of the fuel tank can be inversely deduced. Therefore, accurate and intelligent calculation of the volume of the fuel tank is realized, and further fuel tank metering management is achieved.

Specifically, as shown in Fig. 5, the operation after inputting the fuel quantity change parameter and the measurement parameter into the preset volume calibration model and estimating the volume of the fuel tank further includes the following steps.

At S500, the maximum liquid level pressure in the measurement parameter is extracted.

At S502, a correspondence between hydraulic pressure and a volume percentage is determined according to variation of the liquid level pressure with time.

At S504, a current capacity percentage is estimated according to the maximum liquid level pressure and the correspondence between the hydraulic pressure and the volume percentage.

At S506, a current fuel quantity is calculated according to the volume of the fuel tank and the current capacity percentage.

Through the utilization of the variation of the liquid level pressure with time: Index0 = P0 * k + b, (Pi, Pcti) may be determined to achieve one-to-one correspondence, so as to form a complete correspondence between the hydraulic pressure values and the percentages.

Referring to the correspondence, by combining the maximum liquid level pressure, the current capacity percentage can be determined, and the current fuel quantity may be calculated by multiplying the percentage by the volume of the fuel tank.

The calculation of the current fuel quantity may achieve further fuel tank metering management of fuel theft and fuel leakage.

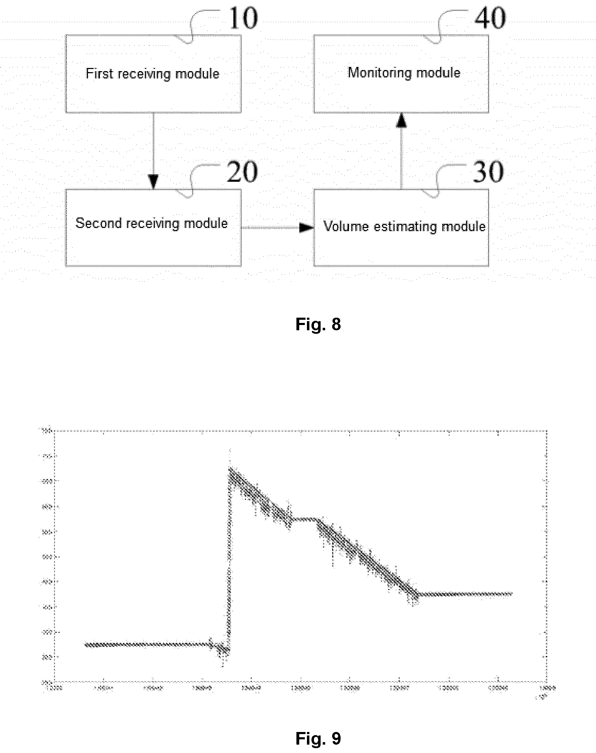

In some embodiments, by combining a hardware terminal, a fuel pressure-time curve of an excavator in one day is collected, as shown in Fig. 9, which shows fuel pressure data collected by the hardware terminal and the fuel pressure data after piecewise fitting.

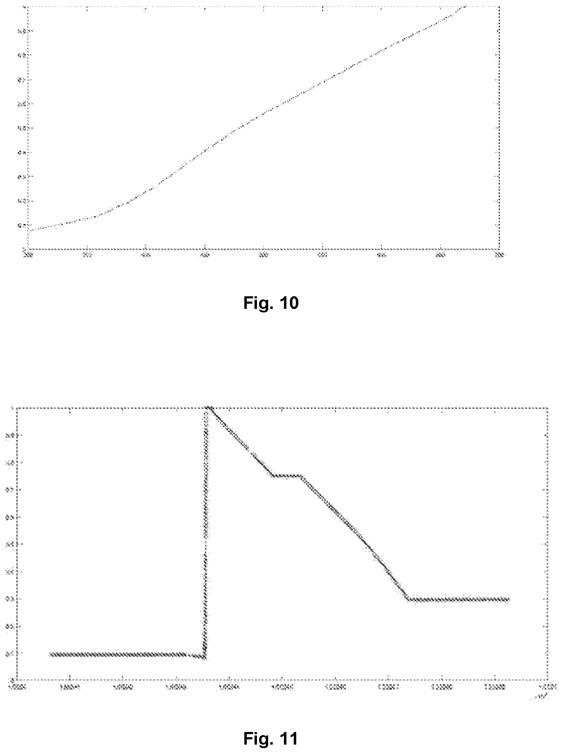

The refueling phase data in the middle is extracted to perform calibration calculation. An acquired hydraulic pressure and fuel level percentage is shown in Fig. 10. A horizontal ordinate is the hydraulic pressure value, and a vertical coordinate is the percentage.

Finally, after a hydraulic pressure curve of the fuel pressure data collected by the hardware terminal in Fig. 9 is converted, the acquired fuel level percentage curve over time is shown in Fig. 11.

It may be learned from the above description that, in this application, the following technical effects are realized.

According to the method and device for detecting the fuel tank, and the server in the embodiments of this application, the fuel quantity change parameter calibrated by the user at the smart terminal is received. The measurement parameter collected from the fueling terminal through the sensor according to the preset frequency is received. The fuel quantity change parameter and the measurement parameter are input into the preset volume calibration model, and the volume of the fuel tank is estimated. The volume calibration model at least includes a full fueling liquid level pressure value and an air liquid level pressure value. In this way, a purpose that the volumes of different types of the fuel tanks may be intelligently estimated is achieved. Therefore, a technical effect of fuel tank metering management is realized, thereby resolving the technical problems of poor fuel tank metering management because the volume of the same type of fuel tank cannot be intelligently estimated.

It is to be noted that the steps shown in the flow diagram of the accompanying drawings may be executed in a computer system, such as a set of computer-executable instructions, and although a logical sequence is shown in the flow diagram, in some cases, the steps shown or described may be executed in a different order than here.

This application further provides a device configured to implement the above detection method. The device includes a first receiving module 10.

The first receiving module 10 is configured to receive a fuel quantity change parameter calibrated by a user at a smart terminal.

Specifically, the operation of receiving the fuel quantity change parameter calibrated by the user at the smart terminal includes the following operations.

Whether the smart terminal has a user calibration operation is monitored.

If yes, the fuel quantity change parameter is generated according to the user calibration operation.

The fuel quantity change parameter is received.

The smart terminal may be portable devices, such as a mobile phone and a tablet computer, or may be a personal computer (pc). In this embodiment, the mobile phone is preferred. Application processing software is installed on the mobile phone, and by means of the software, the user may calibrate the fuel quantity change parameter. Specifically, the user opens the software to enter an interactive interface, and inputs fuel quantity, namely the fuel quantity change parameter, of this fueling in the interactive interface through calibration operation. After the fuel quantity change parameter is acquired, the fuel quantity change parameter is sent to the server. In this way, parameter guarantee may be provided for the volume estimation of the server.

In this embodiment, the smart terminal communicates with the server in wireless transmission modes, such as GPRS, 3G, 4G, and WiFi.

It is to be noted that, in this embodiment, the measurement method is only applicable for volume measurement of regular fuel tanks, such as a cuboid fuel tank and a cube fuel tank.

Preferably, the operation before receiving the fuel quantity change parameter calibrated by the user at the smart terminal further includes the following operations.

A refueling event is detected by using a fuel tank cap detecting device on the fueling terminal.

If the refueling event is detected, the fuel quantity change parameter calibrated by the user at the smart terminal is received.

Only after a certain condition is met, the receiving of the fuel quantity change parameter can be triggered.

In this embodiment, preferably, when the fuel tank cap detecting device on the fueling terminal detects the refueling event, a prompt message is sent to the smart terminal with a binding relationship, to prompt the user to start refueling. After receiving the message, the user may click the prompt message, so that the application processing software can be automatically opened, then corresponding calibration operation is performed to upload the fuel quantity change parameter to the server.

If the fuel tank cap detecting device on the fueling terminal does not detect the refueling event, a link of a stopping reason for no refueling event is output at the smart terminal. In this embodiment, preferably, after receiving the stopping reason, the user may click the link to directly open the software, so as to enter a software interface to check the stopping reason. In this way, the user may continue to operate to restart a program after checking and eliminating the reason on site.

When there is the refueling event, the prompt message may be actively sent. Prompt personnel complete the uploading of the fuel quantity change parameter through the operation of the application processing software. When there is no refueling events, the procedure is stopped, and the uploading of the fuel quantity change parameter is completed only after the user opens the software to operate.

A second receiving module 20 is configured to receive the measurement parameter collected from the fueling terminal through the sensor according to the preset frequency.

Specifically, the operation of receiving the measurement parameter collected from the fueling terminal through the sensor according to the preset frequency includes the following operations.

A parameter set of liquid level pressure collected from the fueling terminal through the sensor according to the preset frequency is received.

The parameter set of the liquid level pressure is recorded and stored.

The fuel quantity change parameter (fuel quantity) is one of parameters of the estimated volume of the fuel tank, so that it requires a plurality of measurement parameters during refueling to realize the estimation of the volume of the fuel tank. The sensor can periodically collect the measurement parameters. That is to say, the liquid level pressure is detected and recorded every a period of time, so as to acquire one parameter set of the liquid level pressure. The liquid level pressure in the parameter set of the liquid level pressure is stored one by one. After refueling is finished, the liquid level pressure is uniformly uploaded to the server, to estimate the volume of the fuel tank.

A volume estimating module 30 is configured to input the fuel quantity change parameter and the measurement parameter into the preset volume calibration model, and estimate the volume of the fuel tank.

The volume calibration model at least includes a full fueling liquid level pressure value and an air liquid level pressure value.

The air liquid level pressure value is constant to any fuel tanks. Thus, it only needs to be preset in a volume calibration model as a default parameter at factory. The air liquid level pressure value is an essential parameter during volume estimation.

The full fueling liquid level pressure value may vary with the height of the fuel tank. Therefore, when refueling is performed at the first time, personnel needs to be reminded that it is in a fueling state, and a measured maximum liquid level pressure value acts as the full fueling liquid level pressure value. The full fueling liquid level pressure value is an essential parameter during volume estimation.

After the two parameters are acquired in advance, by combining the measurement parameter, the fuel quantity change parameter and the preset volume calibration model, the volume of the fuel tank is estimated.

Preferably, the volume estimating module 30 is configured to perform the following operations.

A minimum liquid level pressure and a maximum liquid level pressure in the measurement parameter are extracted.

The correspondence between the hydraulic pressure and the volume percentage is determined according to the variation of the liquid level pressure with time.

A capacity change percentage is estimated according to the minimum liquid level pressure, the maximum liquid level pressure and the correspondence between the hydraulic pressure and the volume percentage.

The volume of the fuel tank is inversely deduced according to a fuel quantity change percentage and the fuel quantity change parameter.

Specifically, the capacity change percentage is related to the minimum liquid level pressure and the maximum liquid level pressure, and is unrelated to the refueling process. Thus, only the minimum liquid level pressure (the liquid level pressure before refueling) and the maximum liquid level pressure (the liquid level pressure after refueling) are required to be extracted. In this way, in this embodiment, whether a refueling rate is constant is not limited. The constant refueling rate may be adopted, or the non-constant refueling rate may also be adopted. For ease of description, in this embodiment, assuming the refueling rate of the refueling gun is constant, $\Delta v$ generated in $\Delta t$ is the same. If a collection rate of hardware is constant, the $\Delta t$ between two adjacent hydraulic pressure data points is the same, and the corresponding $\Delta v$ is the same.

$Pi\{1...n\}$ is set as a hydraulic pressure value collected at a fixed frequency at a refueling phase. The hydraulic pressure value in air is known as P0. The bottom shape of the fuel tank is regular. Pn is a collected maximum hydraulic pressure value point. P1 is a minimum hydraulic pressure value point collected at one time.

Polynomial fitting (Pi, i-1) is performed by using $Pi\{1...m\}(m<n)$ to acquire a slope k and an offset b. Subscript Index0 corresponding to P0 is calculated by using the k, the b and the hydraulic pressure value P0 in air.

The variation of the liquid level pressure with time is shown as follows: Index0 = P0*k + b.

Then, a distance from P1 to P0 accounts a percentage Pct1 of a distance from Pn to P0 is calculated.

$$Pct1 = 0 - Index0/(n - 1 - Index0)$$

In this way, a corresponding percentage increment $\Delta Pct$ between the adjacent hydraulic pressure values is obtained.

$$\Delta Pct = (1 - Pct1)/(n - 1)$$

A volume percentage Pcti is acquired finally.

$$Pcti = Pct1 + \Delta Pct * (i-1) \quad (i = 1..n)$$

According to Pcti = Pct1 + $\Delta Pct$ * (i-1) (i = 1..n), (Pi, Pcti) may be determined to achieve one-to-one correspondence, so as to form a complete correspondence between the hydraulic pressure values and the percentages.

The minimum and maximum liquid level pressure in the measurement parameter are extracted. Referring to the correspondence between the hydraulic pressure values and the percentages, the percentage of capacity change can be determined, and then the volume of the fuel tank can be inversely deduced. Therefore, accurate and intelligent calculation of the volume of the fuel tank is realized, and further fuel tank metering management is achieved.

Preferably, the device further includes a monitoring module 40. The monitoring module 40 is configured to perform the following operations.

The maximum liquid level pressure in the measurement parameter is extracted.

The correspondence between the hydraulic pressure and the volume percentage is determined according to the variation of the liquid level pressure with time.

A current capacity percentage is estimated according to the maximum liquid level pressure and the correspondence between the hydraulic pressure and the volume percentage.

A current fuel quantity is calculated according to the volume of the fuel tank and the current capacity percentage.

Through the utilization of the variation of the liquid level pressure with time: Index0 = P0 * k + b, (Pi, Pcti) may be determined to achieve one-to-one correspondence, so as to form a complete correspondence between the hydraulic pressure values and the percentages.

Referring to the correspondence, by combining the maximum liquid level pressure, the current capacity percentage can be determined, and the current fuel quantity may be calculated by multiplying the percentage by the volume of the fuel tank.

The calculation of the current fuel quantity may achieve further fuel tank metering management of fuel theft and fuel leakage.

It may be learned from the above description that, in this application, the following technical effects are realized.

According to the method and device for detecting the fuel tank, and the server in the embodiments of this application, the fuel quantity change parameter calibrated by the user at the smart terminal is received. The measurement parameter collected from the fueling terminal through the sensor according to the preset frequency is received. The fuel quantity change parameter and the measurement parameter are input into the preset volume calibration model, and the volume of the fuel tank is estimated. The volume calibration model at least includes a full fueling liquid level pressure value and an air liquid level pressure value. In this way, a purpose that the volumes of different types of the fuel tanks may be intelligently estimated is achieved. Therefore, a technical effect of fuel tank metering management is realized, thereby resolving the technical problems of poor fuel tank metering management because the volume of the same type of fuel tank cannot be intelligently estimated.

It is apparent that those skilled in the art should understand that the above mentioned modules or steps of this application may be implemented by a general computing device, and may also be gathered together on a single computing device or distributed in network composed of multiple computing devices. Optionally, the above mentioned modules or steps of this application may be implemented with program codes executable by the computing device, so that may be stored in a storage device for execution by the computing device, or can be fabricated into individual integrated circuit modules respectively, or multiple modules or steps thereof are fabricated into a single integrated circuit module for implementation. In this way, this application is not limited to any specific combination of hardware and software.

**Claims**

1. A method for measuring the volume of a fuel tank, comprising:

   receiving a fuel quantity change parameter calibrated by a user at a smart terminal (S100);
   receiving a measured liquid level pressure value collected from a fueling terminal through a sensor according to a preset frequency (S102); and
   inputting the fuel quantity change parameter and the measured liquid level pressure value into a preset volume calibration model and estimating the volume of the fuel tank (S104),
   **characterized in that**
   the volume calibration model at least comprises a maximum liquid level pressure value, when the fuel tank is full, and a minimum liquid level pressure value, when the fuel tank is empty, wherein these pressure values are extracted from the measured liquid level pressure (S400, S500).

2. The as claimed in claim 1, wherein the operation of receiving the fuel quantity change parameter calibrated by the user at the smart terminal (S100) comprises:

   monitoring whether the smart terminal has a user calibration operation (S200);
   if yes, generating the fuel quantity change parameter according to the user calibration operation (S202); and
   receiving the fuel quantity change parameter (S204).

3. The method as claimed in claim 1, wherein the operation of receiving the measured liquid level pressure value collected from the fueling terminal through the sensor according to the preset frequency (S102) comprises:

   receiving a parameter set of liquid level pressure collected from the fueling terminal through the sensor according to the preset frequency (S300); and
   recording and storing the parameter set of the liquid level pressure (S302).

4. The method as claimed in claim 1, wherein the operation of inputting the fuel quantity change parameter and the measured liquid level pressure value into the preset volume calibration model and estimating the volume of the fuel tank comprises:

   determining a correspondence between hydraulic pressure and a volume percentage according to variation of the liquid level pressure with time (S402);
   estimating a capacity change percentage according to the minimum liquid level pressure, the maximum liquid level pressure and the correspondence between the hydraulic pressure and the volume percentage (S404); and
   inversely deducing the volume of the fuel tank according to the capacity change percentage and the fuel quantity change parameter (S406).

5. The method as claimed in claim 1, wherein the operation after inputting the fuel quantity change parameter and the measured liquid level pressure value into the preset volume calibration model and estimating the volume of the fuel tank further comprises:

   determining the correspondence between the hydraulic pressure and the volume percentage according to the variation of the liquid level pressure with time (S502);
estimating a current capacity percentage according to the maximum liquid level pressure and the correspondence between the hydraulic pressure and the volume percentage (S504); and
calculating a current fuel quantity according to the volume of the fuel tank and the current capacity percentage (S506).

6. The method as claimed in claim 1, wherein the operation before receiving the fuel quantity change parameter calibrated by the user at the smart terminal further comprises:

    detecting a refueling event by using a fuel tank cap detecting device on the fueling terminal (S600); and
    if the refueling event is detected, receiving the fuel quantity change parameter calibrated by the user at the smart terminal (S602).

7. A device for measuring the volume of a fuel tank, comprising:

    a first receiving module (10), configured to receive a fuel quantity change parameter calibrated by a user at a smart terminal;
    a second receiving module (20), configured to receive a measured liquid level pressure value collected from a fueling terminal through a sensor according to a preset frequency, and
    a volume estimating module (30), configured to input the fuel quantity change parameter and the measured liquid level pressure value into a preset volume calibration model, and estimate the volume of the fuel tank,
    **characterized in that**
    the volume calibration model at least comprises a maximum liquid level pressure value, when the fuel tank is full, and a minimum liquid level pressure value, when the fuel tank is empty,
    and **in that** the second receiving module is configured to extract the minimum liquid level pressure and the maximal liquid level pressure from the measured liquid level pressure.

8. The measurement device as claimed in claim 7, wherein the volume estimating module (30) is configured to perform as follows:

    determining a correspondence between hydraulic pressure and volume percentage according to variation of liquid level pressure with time (S402);
    estimating a capacity change percentage according to the minimum liquid level pressure, the maximum liquid level pressure and the correspondence between the hydraulic pressure and the volume percentage (S404); and
inversely deducing the volume of the fuel tank according to a fuel quantity change percentage and the fuel quantity change parameter (S406).

9. The measurement device as claimed in claim 7, wherein the detection device further comprises a monitoring module, and the monitoring module is configured to perform as follows:

    determining the correspondence between the hydraulic pressure and the volume percentage according to the variation of the liquid level pressure with time;
    estimating a current capacity percentage according to the maximum liquid level pressure and the correspondence between the hydraulic pressure and the volume percentage; and
    calculating a current fuel quantity according to the volume of the fuel tank and the current capacity percentage.

10. A server, configured to perform the measurement method according to any one of claims 1 to 6.

**Patentansprüche**

1. Verfahren zum Messen des Volumens eines Kraftstofftanks, umfassend:

    Empfangen eines Kraftstoffmengenänderungsparameters, der von einem Benutzer an einem intelligenten Terminal kalibriert wird (S100);
    Empfangen eines gemessenen Flüssigkeitspegeldruckwerts, der von einem Betankungsterminal durch einen Sensor gemäß einer voreingestellten Frequenz gesammelt wird (S102); und
    Eingeben des Kraftstoffmengenänderungsparameters und des gemessenen Flüssigkeitsniveaudruckwertes in ein voreingestelltes Volumenkalibrierungsmodell und Schätzen des Volumens des Kraftstofftanks (S104),
    **dadurch gekennzeichnet, dass**
    das Volumenkalibrierungsmodell zumindest einen maximalen Flüssigkeitsniveaudruckwert, wenn der Kraftstofftank voll ist, und einen minimalen Flüssigkeitsniveaudruckwert, wenn der Kraftstofftank leer ist, umfasst, wobei diese Druckwerte aus dem gemessenen Flüssigkeitsdruck extrahiert werden (S400, S500).

2. Verfahren nach Anspruch 1, wobei der Vorgang des Empfangens des vom Benutzer kalibrierten Kraftstoffmengenänderungsparameters am intelligenten Endgerät (S100) umfasst:

Überwachen, ob das intelligente Endgerät einen Benutzerkalibrierungsvorgang hat (S200); wenn ja, Erzeugen des Kraftstoffmengenänderungsparameters gemäß dem Benutzerkalibrierungsvorgang (S202); und Empfangen des Kraftstoffmengenänderungsparameters (S204).

3. Verfahren nach Anspruch 1, wobei der Vorgang des Empfangens des gemessenen Flüssigkeitspegeldruckwerts, der von dem Betankungsanschluss durch den Sensor gemäß der voreingestellten Frequenz (S102) gesammelt wird, umfasst:

Empfangen eines Parametersatzes des Flüssigkeitspegeldrucks, der von dem Betankungsanschluss durch den Sensor gemäß der voreingestellten Frequenz (S300) gesammelt wird; und Aufzeichnen und Speichern des Parametersatzes des Flüssigkeitspegeldrucks (S302).

4. Verfahren nach Anspruch 1, wobei der Vorgang des Eingebens des Kraftstoffmengenänderungsparameters und des gemessenen Flüssigkeitspegeldruckwerts in das voreingestellte Volumenkalibrierungsmodell und des Schätzens des Volumens des Kraftstofftanks umfasst:

Bestimmen einer Übereinstimmung zwischen dem Hydraulikdruck und einem Volumenprozentsatz gemäß der zeitlichen Veränderung des Flüssigkeitspegeldrucks (S402); Schätzen eines Kapazitätsänderungsprozentsatzes gemäß dem minimalen Flüssigkeitspegeldruck, dem maximalen Flüssigkeitspegeldruck und der Übereinstimmung zwischen dem Hydraulikdruck und dem Volumenprozentsatz (S404); und inverses Ableiten des Volumens des Kraftstofftanks gemäß dem Kapazitätsänderungsprozentsatz und dem Kraftstoffmengenänderungsparameter (S406).

5. Verfahren nach Anspruch 1, wobei der Vorgang nach der Eingabe des Kraftstoffmengenänderungsparameters und des gemessenen Flüssigkeitspegeldruckwerts in das voreingestellte Volumenkalibrierungsmodell und die Schätzung des Volumens des Kraftstofftanks ferner Folgendes umfasst:

Bestimmen der Übereinstimmung zwischen dem hydraulischen Druck und dem prozentualen Volumenanteil gemäß der zeitlichen Veränderung des Flüssigkeitspegeldrucks (S502); Schätzen eines aktuellen prozentualen Kapazitätsanteils gemäß dem maximalen Flüssigkeitspegeldruck und der Übereinstimmung zwischen dem hydraulischen Druck und dem prozentualen Volumenanteil (S504); und Berechnen einer aktuellen Kraftstoffmenge gemäß dem Volumen des Kraftstofftanks und dem aktuellen prozentualen Kapazitätsanteil (S506).

6. Verfahren nach Anspruch 1, wobei der Vorgang vor dem Empfangen des Kraftstoffmengenänderungsparameters, der von dem Benutzer an dem intelligenten Endgerät kalibriert wurde, ferner umfasst:

Erfassen eines Betankungsereignisses durch Verwendung einer Kraftstofftankdeckelerfassungsvorrichtung an dem Betankungsendgerät (S600); und wenn das Betankungsereignis erfasst wird, Empfangen des Kraftstoffmengenänderungsparameters, der von dem Benutzer an dem intelligenten Endgerät kalibriert wurde (S602).

7. Vorrichtung zur Messung des Volumens eines Kraftstofftanks, umfassend:

ein erstes Empfangsmodul (10), das so konfiguriert ist, dass es einen Parameter zur Änderung der Kraftstoffmenge empfängt, der von einem Benutzer an einem intelligenten Terminal kalibriert wurde; ein zweites Empfangsmodul (20), das so konfiguriert ist, dass es einen gemessenen Flüssigkeitspegeldruckwert empfängt, der von einem Tankautomaten durch einen Sensor gemäß einer voreingestellten Frequenz gesammelt wird, und ein Volumenschätzungsmodul (30), das so konfiguriert ist, dass es den Kraftstoffmengenänderungsparameter und den gemessenen Flüssigkeitspegeldruckwert in ein voreingestelltes Volumenkalibrierungsmodell eingibt und das Volumen des Kraftstofftanks schätzt, **dadurch gekennzeichnet, dass** das Volumenkalibrierungsmodell zumindest einen maximalen Flüssigkeitspegeldruckwert umfasst, wenn der Kraftstofftank voll ist, und einen minimalen Flüssigkeitspegeldruckwert, wenn der Kraftstofftank leer ist, und dass das zweite Empfangsmodul konfiguriert ist, um den minimalen Flüssigkeitspegeldruck und den maximalen Flüssigkeitspegeldruck aus dem gemessenen Flüssigkeitspegeldruck zu extrahieren.

8. Messvorrichtung nach Anspruch 7, wobei das Volumenabschätzungsmodul (30) so konfiguriert ist, dass es Folgendes durchführt:

Bestimmen eines Zusammenhangs zwischen dem Hydraulikdruck und dem Volumenprozentsatz gemäß der zeitlichen Veränderung des Flüssigkeitspegeldrucks (S402);

Schätzen eines Kapazitätsänderungsprozentsatzes gemäß dem minimalen Flüssigkeitspegeldruck, dem maximalen Flüssigkeitspegeldruck und dem Zusammenhang zwischen dem Hydraulikdruck und dem Volumenprozentsatz (S404); und

inverses Ableiten des Volumens des Kraftstofftanks gemäß einem Kraftstoffmengenänderungsprozentsatz und dem Kraftstoffmengenänderungsparameter (S406).

9. Messvorrichtung nach Anspruch 7, wobei die Erfassungsvorrichtung ferner ein Überwachungsmodul umfasst und das Überwachungsmodul so konfiguriert ist, dass es Folgendes durchführt:

Bestimmen der Übereinstimmung zwischen dem Hydraulikdruck und dem Volumenprozentsatz gemäß der zeitlichen Veränderung des Flüssigkeitspegeldrucks;

Schätzen eines aktuellen Kapazitätsprozentsatzes gemäß dem maximalen Flüssigkeitspegeldruck und der Übereinstimmung zwischen dem Hydraulikdruck und dem Volumenprozentsatz; und

Berechnen einer aktuellen Kraftstoffmenge gemäß dem Volumen des Kraftstofftanks und dem aktuellen Kapazitätsprozentsatz.

10. Server, der so konfiguriert ist, dass er das Messverfahren nach einem der Ansprüche 1 bis 6 durchführt.

**Revendications**

1. Procédé de mesure de volume d'un réservoir de carburant comprenant :

la réception d'un paramètre de modification de quantité de carburant étalonné par un utilisateur sur un terminal intelligent (S100) ;

la réception d'une valeur de pression de niveau de liquide mesurée recueillie à partir d'un terminal de ravitaillement en carburant par l'intermédiaire d'un capteur selon une fréquence prédéfinie (S102) ; et

l'entrée du paramètre de modification de quantité de carburant et de la valeur de pression de niveau de liquide mesurée dans un modèle d'étalonnage de volume prédéfini et l'estimation du volume du réservoir de carburant (S104), **caractérisé en ce que** le modèle d'étalonnage de volume comprend au moins une valeur de pression de niveau de liquide maximale, lorsque le réservoir de carburant est plein, et une valeur de pression de niveau de liquide minimale lorsque le réservoir de carburant est vide, **en ce que** ces valeurs de pression sont extraites de la pression de niveau de liquide mesurée (S400, S500).

2. Procédé selon la revendication 1, en ce que l'opération de réception du paramètre de modification de quantité de carburant étalonné par l'utilisateur sur le terminal intelligent (S100) consiste à :

contrôler si le terminal intelligent a une opération d'étalonnage de l'utilisateur (S200) ;

dans l'affirmative, générer le paramètre de modification de quantité de carburant en fonction de l'opération d'étalonnage de l'utilisateur (S202) ; et

recevoir le paramètre de modification de quantité de carburant (S204).

3. Procédé selon la revendication 1, en ce que l'opération de réception de la valeur de pression de niveau de liquide mesurée recueillie à partir du terminal de ravitaillement en carburant par l'intermédiaire d'un capteur selon la fréquence prédéfinie (S102) consiste à :

recevoir un ensemble de paramètres de pression de niveau de liquide recueilli à partir du terminal de ravitaillement en carburant par l'intermédiaire du capteur selon la fréquence prédéfinie (S300) ; et

enregistrer et stocker l'ensemble de paramètres de la pression de niveau de liquide (S302) .

4. Procédé selon la revendication 1, en ce que l'opération d'entrée du paramètre de modification de quantité de carburant et de la valeur de pression de niveau de liquide mesurée dans le modèle d'étalonnage de volume prédéfini et l'estimation du volume du réservoir de carburant consiste à :

déterminer une correspondance entre la pression hydraulique et un pourcentage de volume en fonction de la variation de la pression de niveau de liquide dans le temps (S402) ;

estimer un pourcentage de modification de capacité en fonction de la pression de niveau de liquide minimale, la pression de niveau de liquide maximale et la correspondance entre la pression hydraulique et le pourcentage de volume (S404) ; et

déduire inversement le volume du réservoir de carburant en fonction du pourcentage de modification de capacité et du paramètre de modification de quantité de carburant (S406).

5. Procédé selon la revendication 1, en ce que l'opération après l'entrée du paramètre de modification de quantité de carburant et de la valeur de pression de niveau de liquide mesurée dans le modèle d'étalonnage de volume prédéfini et l'estimation du volume du réservoir de carburant consiste en outre à :

déterminer la correspondance entre la pression hydraulique et le pourcentage de volume en fonction de la variation de la pression de niveau de liquide dans le temps (S502) ;

estimer un pourcentage de capacité actuel en fonction de la pression de niveau de liquide maximale et la correspondance entre la pression hydraulique et le pourcentage de volume (S504) ; et

calculer une quantité de carburant actuelle en fonction du volume du réservoir de carburant et du pourcentage de capacité actuel (S506).

6. Procédé selon la revendication 1, en ce que l'opération précédant la réception du paramètre de modification de quantité de carburant étalonné par l'utilisateur sur un terminal intelligent consiste en outre à :

détecter un événement de ravitaillement en carburant à l'aide d'un dispositif de détection de bouchon de réservoir de carburant sur le terminal de ravitaillement en carburant (S600) ; et

si l'événement de ravitaillement en carburant est détecté, recevoir le paramètre de modification de quantité de carburant étalonné par l'utilisateur sur le terminal intelligent (S602).

7. Dispositif de mesure de volume d'un réservoir de carburant, comprenant :

un premier module de réception (10) conçu pour recevoir un paramètre de modification de quantité de carburant étalonné par un utilisateur sur un terminal intelligent ;

un second module de réception (20) conçu pour recevoir une valeur de pression de niveau de liquide mesurée recueillie à partir d'un terminal de ravitaillement en carburant par l'intermédiaire d'un capteur selon une fréquence prédéfinie ; et

un module d'estimation de volume (30) conçu pour entrer le paramètre de modification de quantité de carburant et la valeur de pression de niveau de liquide mesurée dans un modèle d'étalonnage de volume prédéfini, et estimer le volume du réservoir de carburant, **caractérisé en ce que** le modèle d'étalonnage de volume comprend au moins une valeur de pression de niveau de liquide maximale lorsque le réservoir de carburant est plein, et une valeur de pression de niveau de liquide minimale lorsque le réservoir de carburant est vide, et **en ce que** le seconde module de réception est conçu pour extraire la pression de niveau de liquide minimale et la pression de niveau de liquide maximale de la pression de niveau de liquide mesurée.

8. Dispositif de mesure selon la revendication 7, en ce que le module d'estimation de volume (30) est conçu pour effectuer ce qui suit :

la détermination d'une correspondance entre la pression hydraulique et le pourcentage de volume en fonction de la variation de la pression de niveau de liquide dans le temps (S402) ;

l'estimation d'un pourcentage de modification de capacité en fonction de la pression de niveau de liquide minimale, la pression de niveau de liquide maximale et la correspondance entre la pression hydraulique et le pourcentage de volume (S404) ; et

la déduction inverse du volume du réservoir de carburant en fonction du pourcentage de modification de quantité de carburant et du paramètre de modification de quantité de carburant (S406).

9. Dispositif de mesure selon la revendication 7, en ce que le dispositif de détection comprend en outre un module de contrôle, et le module de contrôle est conçu pour effectuer ce qui suit :

la détermination de la correspondance entre la pression hydraulique et le pourcentage de volume en fonction de la variation de la pression de niveau de liquide dans le temps ;

l'estimation d'un pourcentage de capacité actuel en fonction de la pression de niveau de liquide maximale et la correspondance entre la pression hydraulique et le pourcentage de volume ; et

le calcul d'une quantité de carburant actuelle en fonction du volume du réservoir de carburant et le pourcentage de capacité actuel.

10. Serveur conçu pour effectuer le procédé de mesure selon l'une des revendications 1 à 6.

Receive a fuel quantity change parameter calibrated by a user at a smart terminal ⟋ S100

↓

Receive a measurement parameter collected from a fueling terminal through a sensor according to a preset frequency ⟋ S102

↓

Input the fuel quantity change parameter and the measurement parameter into a preset volume calibration model and estimating the volume of the fuel tank ⟋ S104

**Fig. 1**

Monitor whether a smart terminal has a user calibration operation ⟋ S200

↓

If yes, generate a fuel quantity change parameter according to the user calibration operation ⟋ S202

↓

Receive the fuel quantity change parameter ⟋ S204

**Fig. 2**

Receive a parameter set of liquid level pressure collected from a fueling terminal through a sensor according to a preset frequency ⟋ S300

↓

Record and store the parameter set of the liquid level pressure ⟋ S302

**Fig. 3**

Extract a minimum liquid level pressure and a maximum liquid level pressure in a measurement parameter ⟋ S400

Determine a correspondence between hydraulic pressure and a volume percentage according to variation of the liquid level pressure with time ⟋ S402

Estimate a capacity change percentage according to the minimum liquid level pressure, the maximum liquid level pressure and the correspondence between the hydraulic pressure and the volume percentage ⟋ S404

Inversely deduce the volume of the fuel tank according to a fuel quantity change percentage and the fuel quantity change parameter ⟋ S406

**Fig. 4**

Extract a maximum liquid level pressure in a measurement parameter ⟋ S500

Determine a correspondence between hydraulic pressure and volume percentage according to variation of liquid level pressure with time ⟋ S502

Estimate a current capacity percentage according to the maximum liquid level pressure and the correspondence between the hydraulic pressure and the volume percentage ⟋ S504

Calculate a current fuel quantity according to the volume of the fuel tank and the current capacity percentage ⟋ S506

**Fig. 5**

Detect a refueling event by using a fuel tank cap detecting device on a fueling terminal

S600

If the refueling event is detected, receive a fuel quantity change parameter calibrated by a user at a smart terminal

S602

**Fig. 6**

10

First receiving module

20

Second receiving module

30

Volume estimating module

**Fig. 7**

**Fig. 8**

**Fig. 9**

**Fig. 10**

**Fig. 11**

**EP 3 967 990 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104634409 B
- KR 20060047387 A
- RU 2047108 C1